# EUROPEAN PATENT APPLICATION

(11) **EP 4 822 880 A1**
(43) Date of publication of application: **14.10.2026**
(21) Application number: 25907660.2
(22) Date of filing: 21.08.2025
(51) Int. Cl.: H01M 50/538, H01M 10/04

(54) **FOIL TAB FORMING APPARATUS AND METHOD**

(30) Priority: 19.12.2024 KR 20240191685
(71) Applicant: LG Energy Solution, Ltd., Seoul 07335 (KR)
(72) Inventor: PARK, Tae-Sung, Daejeon 34122 (KR)
(74) Representative: Goddar, Heinz J.
(86) International application number: PCT/KR2025/012721
(87) International publication number: WO 2026/134522

(57) **Abstract**

The present disclosure provides a foil tab forming apparatus and method for forming an electrode tab exposed at one end of an electrode assembly in which a first electrode, a separator, and a second electrode are laminated and wound around a winding axis, and the foil tab forming apparatus includes a base portion having a flat surface; a pressure portion protruding from the flat surface of the base portion in the winding axis direction and configured to divide the electrode tab into a plurality of regions; and a plurality of forming portions provided corresponding to the plurality of divided regions and each configured to bend the electrode tab radially inward around the winding axis within each of the divided regions.

## Description

### TECHNICAL FIELD

The present disclosure relates to a foil tab forming apparatus and method, and more specifically, to a foil tab forming apparatus and method for an improved forming method. This application is based on and claims priority from Korean Patent Application No. 10-2024-0191685, filed on December 19, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, that is, a unit battery cell is about 2.5 V to 4.5 V. Therefore, when a higher output voltage is required, a plurality of battery cells may be connected in series to form a battery pack. Additionally, depending on the charging and discharging capacity required for the battery pack, multiple battery cells may be connected in parallel to form a battery pack. Therefore, the number of battery cells included in the battery pack may be variously set according to the required output voltage or the demanded charging and discharging capacity.

Meanwhile, conventional cylindrical secondary batteries adopted a structure in which tabs were welded to the electrode assembly to electrically connect the electrodes and external terminals. The tabs were mainly manufactured from separate metal members and designed to be welded to the electrode assembly, but this structure had the potential to affect battery performance due to increased contact resistance and uneven current density between the tab and the electrode assembly. Additionally, there were technical limitations in the design and manufacturing methods of the tabs to meet the demand for increased battery capacity.

To overcome these limitations, a design utilizing the uncoated portions of the positive electrode and the negative electrode themselves as electrode tabs has been proposed. Using the uncoated portions as electrode tabs may optimize the current path, reduce contact resistance, and further enhance battery capacity and energy efficiency. However, when utilizing the uncoated portions as electrode tabs, uniform arrangement and fixing of the electrode tabs are important. In particular, the importance of research on a forming technology that stably bends and uniformly presses the electrode tab during the assembly process is emerging.

This forming technology is an important process having a direct impact on the arrangement of electrode tabs and battery performance. When the electrode tabs are not bent uniformly, this may lead to not only increased defect rates in the assembly process, but also the heat generation and reduced life of the secondary battery. Additionally, a method for preventing the electrode tabs from obscuring the reform hole where the welding rod is inserted in the assembly process during forming, is required.

Therefore, there is a need for improved forming technology and design enabling smooth bending of the electrode tabs to optimize the current path, maximize battery performance, and enhance the efficiency of assembly process.

### DISCLOSURE

### Technical Problem

Therefore, the present disclosure is directed to providing a foil tab forming apparatus and method for improving the performance of a battery cell.

Additionally, the present disclosure is directed to providing a foil tab forming apparatus and method capable of smoothly bending the foil tab.

Additionally, the present disclosure is directed to providing a foil tab forming apparatus and method ensuring that the forming thickness of the foil tab is uniform as a whole.

Additionally, the present disclosure is directed to providing a foil tab forming apparatus and method that does not obscure the reform hole required in the welding process during forming.

However, technical problems to be solved by the present disclosure are not limited to the above-described problems, and other problems not mentioned herein may be clearly understood by those skilled in the art from the following description of the present disclosure.

### Technical Solution

To solve the above problem, the present disclosure provides a foil tab forming apparatus for forming an electrode tab exposed at one end of an electrode assembly in which a first electrode, a separator, and a second electrode are laminated and wound around a winding axis, including a base portion having a flat surface; a pressure portion protruding from the flat surface of the base portion in the winding axis direction and configured to divide the electrode tab into a plurality of regions; and a plurality of forming portions provided corresponding to the plurality of divided regions and each configured to bend the electrode tab radially inward around the winding axis within each of the divided regions.

For example, the pressure portion may have a radial structure based on the central point of the pressure portion.

For example, the pressure portion may have a length longer than the length of the electrode tab based on the winding axis direction.

For example, each of the plurality of forming portions may include a forming jig, and the forming jig may be configured to move toward the central point of the pressure portion.

For example, each of the plurality of forming portions may include a connection portion provided on the flat surface of the base portion, and the forming jig may be coupled to the connection portion and configured to move along the length direction of the connection portion.

For example, the forming jig may have a length longer than the length of the electrode tab based on the winding axis direction.

For example, the pressure portion may be disposed between adjacent connection portions.

For example, the plurality of connection portions may form a symmetrical structure based on the central point of the pressure portion.

For example, each of the plurality of connection portions may be disposed to be spaced apart at a predetermined distance from the central point of the pressure portion.

For example, the foil tab forming apparatus may include an insertion portion configured to be inserted into the central hole of the electrode assembly to a predetermined depth.

For example, the insertion portion may protrude further from the base portion than the pressure portion based on the winding axis direction.

For example, the pressure portion may have a length longer than the length of the electrode assembly based on the radial direction.

For example, the pressure portion may be configured to press the electrode tab in the winding axis direction as the insertion portion is inserted into the central hole of the electrode assembly.

For example, each of the plurality of forming portions may be configured to bend the electrode tab radially inward from the outer circumferential surface of the electrode assembly while the electrode tab is pressed in the winding axis direction by the pressure portion.

For example, the pressure portion and the forming portion may be configured to surround the electrode tab in each of the plurality of divided regions when the insertion portion is inserted into the central hole.

Additionally, to solve the above problem, the present disclosure provides a foil tab forming method for forming an electrode tab exposed at one end of an electrode assembly in which a first electrode, a separator, and a second electrode are laminated and wound around a winding axis, including a first step of preparing the electrode assembly; a second step of aligning the central hole of the electrode assembly with the center of the pressure portion in a line; a third step of pressing the electrode tab along the winding axis direction by the pressure portion to divide the electrode tab into a plurality of regions; and a fourth step of moving each forming portion provided in each of the divided regions toward the center of the pressure portion to bend the electrode tab radially inward.

For example, the third step may include inserting an insertion portion configured to be inserted into the central hole of the electrode assembly to a predetermined depth and simultaneously, pressing the electrode tab by the pressure portion.

### Advantageous Effects

A foil tab forming apparatus and method according to various embodiments of the present disclosure have the effect of enabling smooth bending of the foil tab.

Additionally, a foil tab forming apparatus and method according to various embodiments have the effect of ensuring that the forming thickness of the electrode tab of the electrode assembly is uniform as a whole.

Additionally, a foil tab forming apparatus and method according to various embodiments have the effect of not obscuring the reform hole required in the welding process during forming.

However, effects to be obtained by the present disclosure are not limited to the above-described effects, and other technical effects not mentioned herein may be clearly understood by those skilled in the art from the following description of the present disclosure.

### DESCRIPTION OF DRAWINGS

FIG. 1 is a view for describing each configuration of an electrode assembly before winding according to an embodiment of the present disclosure.
FIG. 2 is a view schematically showing the laminated structure of each configuration of the electrode assembly of FIG. 1.
FIG. 3 is a view schematically showing the jelly roll-shaped electrode assembly of FIG. 1.
FIG. 4 is a view schematically showing an electrode tab of the electrode assembly of FIG. 3.
FIG. 5 is a view schematically showing an electrode tab according to another embodiment of the electrode assembly of FIG. 3.
FIG. 6 is a view schematically showing a foil tab forming apparatus according to an embodiment of the present disclosure.
FIG. 7 is a front view of the foil tab forming apparatus of FIG. 6.
FIG. 8 is a view for describing a state in which the electrode assembly of FIG. 3 is pressed by the pressure portion of the foil tab forming apparatus of FIG. 6.
FIG. 9 is a cross-sectional view taken along line A-A' of FIG. 8.
FIG. 10 is a view for describing a state in which the electrode tab region of FIG. 4 is divided into a plurality of sections.
FIG. 11 is a view for describing a state in which the electrode tab region of FIG. 5 is divided into a plurality of sections.
FIG. 12 is a view for describing a state in which the electrode assembly of FIG. 3 is pressed by the forming portion of the foil tab forming apparatus of FIG. 6.
FIG. 13 is a view for describing a state in which the electrode tab of FIG. 4 is bent radially inward.
FIG. 14 is a view for describing a state in which the electrode tab of FIG. 5 is bent radially inward.
FIG. 15 is a flowchart of a foil tab forming method according to an embodiment of the present disclosure.
FIG. 16 is a flowchart of a foil tab forming method according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Meanwhile, terms indicating directions such as upper, lower, left, right, front, and rear may be used in the present disclosure, but these terms are only for convenience of description, and it is obvious to those skilled in the art that the terms may vary depending on the position, arrangement, or rotation of a reference object, or the position of an observer.

The present disclosure may be implemented by each of the following embodiments independently. Furthermore, the present disclosure may be implemented by combining two or more of the following embodiments. Each of the following embodiments may be implemented independently and may also be freely combined with each other.

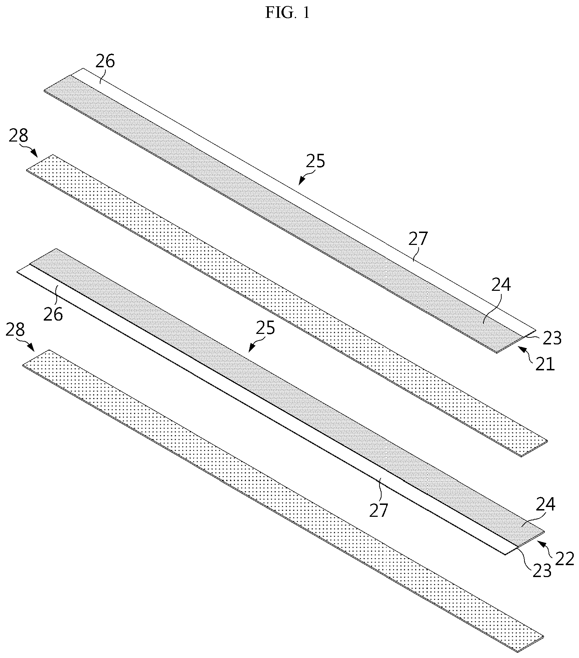

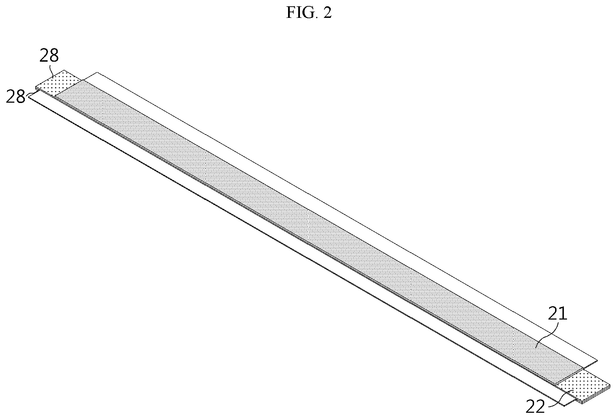

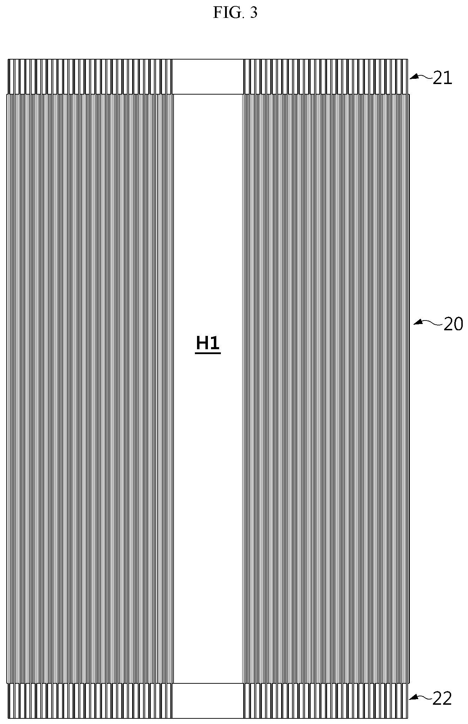

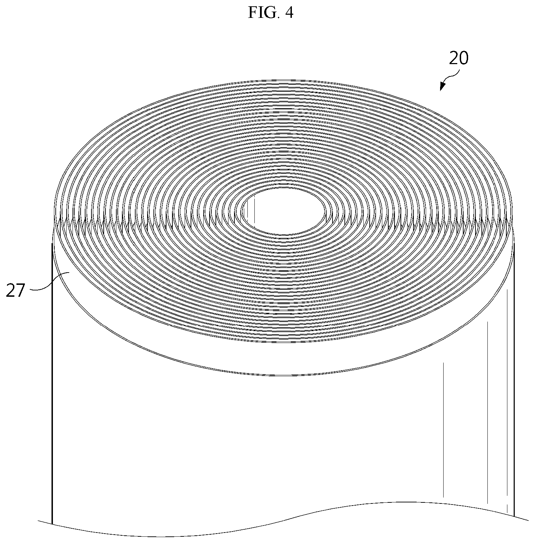

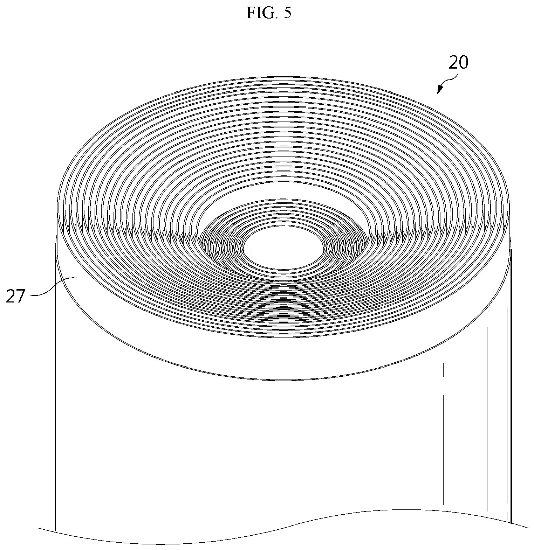

FIG. 1 is a view for describing each configuration of an electrode assembly 20 before winding according to an embodiment of the present disclosure, FIG. 2 is a view schematically showing the laminated structure of each configuration of the electrode assembly 20 of FIG. 1, FIG. 3 is a view schematically showing the jelly roll-shaped electrode assembly 20 of FIG. 1, FIG. 4 is a view schematically showing an electrode tab 27 of the electrode assembly 20 of FIG. 3, and FIG. 5 is a view schematically showing an electrode tab according to another embodiment of the electrode assembly of FIG. 3.

First, embodiments of an electrode assembly 20 in which a foil tab forming apparatus 100 according to the present disclosure may be used will be described with reference to FIGS. 1 and 2. However, the foil tab forming apparatus 100 of the present disclosure does not necessarily have to be applied only to the electrode assembly 20 having the structure described below.

The electrode assembly 20 in which a foil tab forming apparatus 100 according to the present disclosure may be used may be configured such that the first electrode 21, the second electrode 22, and the separator 28 interposed therebetween are wound around a winding axis.

The electrode assembly 20 after winding may have a jelly-roll shape. When viewed from the top or bottom of the electrode assembly 20 in the winding axis direction, the outer shape of the electrode assembly 20 along the circumferential direction may be circular. However, the structure of the electrode assembly 20 is not limited by the embodiment, and may have a winding structure well known in the art.

Each of the first electrode 21, the second electrode 22, and the separator 28 may be formed to have a predetermined width along the winding axis direction and extend to a predetermined length along the winding direction. The first electrode 21 may be a positive electrode plate, and the second electrode 22 may be a negative electrode plate. Of course, the opposite may also be true.

The first electrode 21 and the second electrode 22 may be manufactured in a sheet form. The first electrode 21 and the second electrode 22 may be configured in a form in which an active material layer 25 is applied to at least a portion of the surface of a metal foil 23. The first electrode 21 and the second electrode 22 may have a coated portion 24 region where the active material layer 25 is applied and an uncoated portion 26 region where the active material layer 25 is not applied.

The uncoated portion 26 may be exposed to the outside of the separator 28 while forming a plurality of winding turns based on the winding axis of the electrode assembly 20. That is, the positive electrode plate and the negative electrode plate may each include the uncoated portion 26 where an active material is not coated at the end of long side in the winding axis direction. And, the uncoated portions 26 of the first electrode 21 and the second electrode 22 may be configured to face opposite directions in the winding axis direction. The uncoated portion 26 of the first electrode 21 may be accommodated inside the battery can 10 so as to be positioned at one end in the winding axis direction, and the uncoated portion 26 of the second electrode 22 may be accommodated inside the battery can 10 so as to be positioned at the other end in the winding axis direction.

The uncoated portions 26 of the first electrode 21 and the second electrode 22 may each be formed at one end in the winding axis direction to have a predetermined width along the winding axis direction and to extend to a predetermined length along the winding direction.

At this time, the uncoated portions 26 of the first electrode 21 and the second electrode 22 disposed at both ends of the electrode assembly 20 in the winding axis direction where the foil tab forming apparatus 100 of the present embodiment may be used may have protruding heights in the winding axis direction that are at least partially or entirely the same. Of course, the uncoated portions 26 are not limited to this shape, and may have a shape in which the protruding heights in the winding axis direction increase stepwise or gradually along the winding axis direction.

Here, the positive electrode active material coated on the positive electrode plate and the negative electrode active material coated on the negative electrode plate may be used without limitation as long as they are active materials known in the art.

And, the separator 28 may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof. As another example, the separator may be a conventional porous nonwoven fabric, for example, a nonwoven fabric made of high melting point glass fiber, polyethylene terephthalate fiber, and the like.

At least one surface of the separator 28 may include a coating layer of inorganic particles. Additionally, the separator 28 itself may be formed of a coating layer of inorganic particles. The particles constituting the coating layer may have a structure coupled to a binder so that an interstitial volume exists between adjacent particles.

Such an uncoated portion 26 may itself function as an electrode tab 27.

Referring to FIGS. 3 and 4, the electrode tabs 27 of the first electrode 21 and the second electrode 22 disposed at both ends of the electrode assembly 20 in the winding axis direction may each be configured to have the same width along the winding axis direction.

The electrode tabs 27 of the first electrode 21 and the second electrode 22 disposed at both ends of the electrode assembly 20 in the winding axis direction where the foil tab forming apparatus 100 of the present embodiment may be used may be configured to have the same height protruding from the core to the outer circumferential side in the winding axis direction.

However, the electrode assembly 20 where the foil tab forming apparatus 100 of the present embodiment may be used is not limited to the forms illustrated herein and may be designed to include electrode tabs 27 of various forms. For example, referring to FIG. 5, the electrode tabs 27 of the first electrode 21 and the second electrode 22 disposed at both ends of the electrode assembly 20 in the winding axis direction may each be omitted in a predetermined section near the core of the electrode assembly 20. Additionally, the electrode tabs 27 of the first electrode 21 and the second electrode 22 disposed at both ends of the electrode assembly 20 in the winding axis direction may have a shape in which the protruding heights in the winding axis direction increase gradually or stepwise from the core to the outer circumferential side.

The electrode tabs 27 of the first electrode 21 and the second electrode 22 disposed at both ends of the electrode assembly 20 in the winding axis direction where the foil tab forming apparatus 100 of the present embodiment may be used may have the form of a full tab that is not notched as a whole.

Additionally, as another embodiment, the electrode tabs 27 of the first electrode 21 and the second electrode 22 disposed at both ends of the electrode assembly 20 in the winding axis direction may have the form of a notching tab that is notched. Within the section where the notching tab of the first electrode 21 and the notching tab of the second electrode 22 are provided, the electrode tabs 27 may have a shape in which the protruding heights in the winding axis direction are the same.

This electrode assembly 20 requires a processing process of bending the electrode tabs 27 disposed at both ends in the winding axis direction radially inward based on the central hole H1.

The foil tab forming apparatus 100 according to an embodiment of the present disclosure is a processing apparatus designed to uniformly bend the electrode tabs 27 of the electrode assembly 20 radially inward for this processing process. Hereinafter, the foil tab forming apparatus 100 will be described in detail.

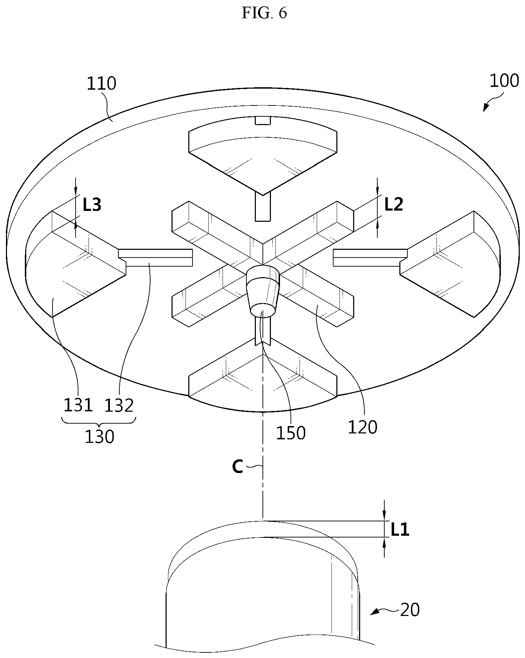

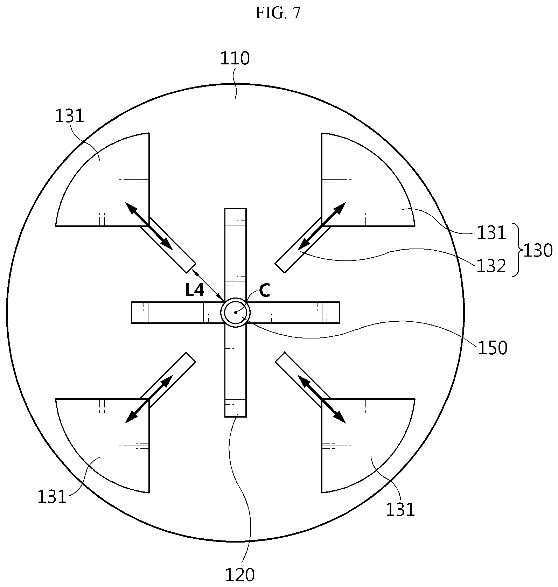

FIG. 6 is a view schematically showing a foil tab forming apparatus 100 according to an embodiment of the present disclosure, and FIG. 7 is a front view of the foil tab forming apparatus 100 of FIG. 6.

Referring to FIGS. 6 and 7, a foil tab forming apparatus 100 according to an embodiment of the present disclosure may broadly include a base portion 110, a pressure portion 120, and a forming portion 130.

The base portion 110 serves as a support structure for the foil tab forming apparatus 100 and is designed to stably support and arrange each component and part of the foil tab forming apparatus 100. The base portion 110 may be formed from a rigid and durable material, and may include a flat surface to allow the components to be mounted without wobbling.

Additionally, the base portion 110 enables precise positional adjustment during the assembly and operation of other components, thereby improving the processing accuracy for the electrode tab 27. For example, the base portion 110 may include mating grooves, fixing pins, or screw-fastening portions at specific locations to allow the pressure portion 120 and the forming portion 130 to be correctly installed.

The pressure portion 120 may be configured to protrude from the flat surface of the base portion 110 in the winding axis direction to divide the electrode tab 27 into a plurality of regions. This allows the electrode tabs in each region to be uniformly aligned and smoothly bent in the subsequent forming process.

Additionally, the forming portion 130 may be provided in plurality corresponding to the plurality of divided regions, and may each configured to bend the electrode tab 27 radially inward around the winding axis within each of the divided regions. This allows the electrode tabs in each region to be bent in a certain direction by each forming portion 130, thereby ensuring uniform forming as a whole.

That is, the forming portion 130 designed to match each divided region of the pressure portion 120 may precisely bend the electrode tab 27 in a uniform direction to maintain the overall height of the electrode tab 27 constant, thereby allowing the total height of the entire electrode assembly 20 to remain uniform within the designed specifications.

Therefore, the foil tab forming apparatus 100 according to an embodiment of the present disclosure may perform the arrangement and bending process of the electrode tab 27 uniformly and precisely through the interaction between the pressure portion 120 and the forming portion 130, thereby simultaneously improving the manufacturing efficiency and performance of the battery cell.

Hereinafter, the specific structure of the pressure portion 120 and the forming portion 130 will be described.

The pressure portion 120 may be designed in various shapes to divide the electrode tab 27 into a plurality of regions.

As an example, the pressure portion 120 may be formed in a single integrated protruding structure. In this case, the pressure portion 120 has a structure continuously protruding from the flat surface of the base portion 110, and may be composed of continuous or spaced-apart protruding lines to define each region. This integral structure of the pressure portion 120 may be advantageous in simplifying the manufacturing process and enhancing structural rigidity.

As an example, the pressure portion 120 may be formed in a plurality of independent protruding structures. In this case, the pressure portion 120 may have the form of ribs or partition walls arranged at regular intervals. The plurality of protruding structures of the pressure portion 120 may each be arbitrarily modified according to the desired design process.

Whether the pressure portion 120 is in a single integrated structure or in a plurality of protruding structures, each design may minimize deformation of the electrode tabs 27 and improve the precision of the forming process by aligning the arrangement of the electrode tabs 27 and providing uniform pressure during the bending process.

Additionally, the pressure portion 120 has an appropriate height and thickness to effectively fix the electrode tabs 27, and may be implemented in various shapes depending on the size and arrangement of the electrode tabs 27. For example, the pressure portion 120 may have a linear, curved, or polygonal cross-section.

As an example, the pressure portion 120 may be designed in a radial structure based on the central point C of the pressure portion 120. This radial structure may uniformly divide the electrode tab 27 in the outer circumferential surface direction based on the central hole H1. For example, the pressure portion 120 may be formed in a cross shape. In this case, the pressure portion 120 has a structure protruding in two axial directions orthogonal to each other based on the central point C, and may divide the electrode tab 27 into four symmetrical regions. This cross shape may, while structurally simple, align the positions of the electrode tabs 27 and uniformly divide the regions. Additionally, the cross shape may increase the efficiency of the manufacturing process and allow the electrode tabs in each region to be correctly bent in the subsequent forming process.

The radial structure of the pressure portion 120 may be implemented in various forms along a plurality of axes in addition to the cross shape. For example, a structure forming a radial section of a triangle, square, or polygon is also possible, which may be applied depending on the arrangement and size of the electrode tabs 27 and battery design requirements. The radial structure may uniformly support the electrode tabs 27 in all directions and maintain alignment with the winding axis of the electrode assembly 20.

The pressure portion 120 not only divides the electrode tabs 27, but may also provide a predetermined pressure to ensure that the electrode tabs 27 within each section maintain uniform spacing and arrangement.

The pressure portion 120 may be designed in a modular manner so that the position and size thereof may be adjusted in consideration of the arrangement and placement state of the electrode tabs 27. This enables flexible adaptation to various electrode assembly 20 designs and allows for application according to the type and specifications of the battery cell.

The pressure portion 120 may be designed to have a length L2 longer than the length L1 of the electrode tab 27 based on the winding axis direction. Thus, when the electrode tab 27 contacts the pressure portion 120, stable support and uniform pressure may be provided over the entire length of the electrode tab 27. If necessary, the pressure portion 120 may be adjusted to have a length L2 similar to or slightly longer than the length L1 of the electrode tab 27, which may allow the electrode tab 27 to be precisely aligned with the pressure portion 120.

The forming portion 130 may be provided in plurality. Each of these forming portions 130 may include a forming jig 131.

The forming jig 131 may be designed to move toward the central point C of the pressure portion 120, and may operate to uniformly bend the electrode tab 27 based on the winding axis. This forming jig 131 may provide the structural stability and operability required to increase the bending angle and precision of the electrode tab 27.

The forming jig 131 may be designed in a specific shape to be suitable for the structure of the pressure portion 120, for example, the radial structure of the pressure portion 120. For example, it may be formed in an arc shape having a constant curvature to be coupled along the angles of the pressure portion 120 arranged radially.

The plurality of forming portions 130 may each include a connection portion 132 installed on the flat surface of the base portion 110. The connection portion 132 serves to couple the forming jig 131 to the base portion 110, and may perform the function of guiding the forming jig 131 to move along a precise trajectory.

The connection portion 132 may have a structure extending in the length direction, and may be configured to allow the forming jig 131 to move toward the central point C along the length direction of the connection portion 132. For example, the connection portion 132 may be provided in a rail shape where the forming jig 131 may be mounted to guide the movement path of the forming jig 131.

The connection portion 132 may be fixedly installed on the flat surface of the base portion 110, and may have a structure extending in the length direction so that the forming jig 131 may move along a straight or curved path toward the central point C. The connection portion 132 guides the forming jig 131 to move smoothly, and may provide high precision so that the forming jig 131 operates properly at the correct position.

The connection portion 132 may include not only a rail but also various additional structures to fix the position of the forming jig 131 or control the movement thereof. For example, the connection portion may include a moving element such as a slider to ensure smooth and stable movement of the forming jig 131. Additionally, a stopper or locking device may be provided to precisely align the position of the forming jig 131 with the pressure portion 120.

Furthermore, the forming jig 131 and the connection portion 132 may be designed to support automated process control as needed. For example, the connection portion 132 may include a motor-driven rail system. Additionally, the forming jig 131 may be configured to include a sensor to detect the position or shape of the pressure portion 120 or the electrode tab 27 of the electrode assembly 20 and automatically move to the corresponding position. This design may maximize process speed and accuracy to ensure high productivity even in mass production process.

The forming jig 131 may maximize the stability and precision of the forming process by moving while maintaining a constant force and directionality in a state of being coupled to the connection portion 132. This design may ensure that each forming jig 131 may uniformly bend the electrode tab 27 within the divided region.

The forming jig 131 may be designed to have a length L3 longer than the length L1 of the electrode tab 27 based on the winding axis direction. This may provide a supporting force so that the electrode tab 27 may be stably bent when in contact with the forming jig 131. For example, the forming jig 131 may be coupled or mounted to the connection portion 132, and the connection portion 132 may serve to guide the movement of the forming jig. At this time, the forming jig 131 may uniformly bend the electrode tab 27 by utilizing the remaining length excluding the length of the connection portion 132. Through this, the forming jig 131 may perform precise bending work over the entire length of the electrode tab 27, while maintaining a stable operating environment through coupling to the connection portion 132.

The forming jig 131 may be designed to have a length L3 equal to the length L2 of the pressure portion 120 based on the winding axis direction. This ensures that the forming jig 131 has integrity when coupled to the pressure portion 120, and may allow each component to operate harmoniously with one another during the forming process. In this way, the forming jig 131 having integrity when coupled to the pressure portion 120 may maximize the uniformity of the electrode tab 27 arrangement and forming precision by ensuring that the bending region of the electrode tab 27 and the divided region of the pressure portion 120 are precisely aligned.

The pressure portion 120 may be disposed between adjacent connection portions 132. This allows the forming process of the electrode tab 27 to be efficiently performed through interaction with the connection portion 132 while the pressure portion 120 maintains a stable position.

These plurality of connection portions 132 may form a symmetrical structure based on the central point C of the pressure portion 120. This symmetrical structure may be utilized to optimize the movement path and alignment of the forming jig 131 by allowing each connection portion 132 to maintain the same spacing and position. In particular, this symmetrical structure minimizes asymmetrical forces or deformation that may occur during the forming process, and may allow the electrode tabs 27 to be uniformly arranged and bent.

In this way, as the pressure portion 120 is disposed between the connection portions 132, each connection portion 132 may serve to guide the forming jig 131 to be stably coupled to the pressure portion 120. Additionally, since the connection portions 132 are arranged symmetrically based on the central point C of the pressure portion 120, they provide harmony and stability to the entire structure and may support the operation of the plurality of forming jigs 131 at equal intervals. This may contribute to improving the precision and productivity of the forming process.

The plurality of connection portions 132 may each be disposed to be spaced apart at a predetermined distance L4 from the central point C of the pressure portion 120. This arrangement may prevent excessive pressure from being applied to the electrode tab 27 during the forming process while allowing the connection portions 132 to smoothly guide the movement of the forming jig 131. This prevents excessive deformation of or damage to the electrode tab 27, and may maintain the precision of the forming process.

The plurality of connection portions 132 are each disposed toward the central point C of the pressure portion 120, and may be connected to the pressure portion 120. This connection structure may strengthen the integrity of the pressure portion 120 and the connection portion 132 through physical coupling therebetween. This may prevent minor misalignment or uneven bending that may occur during the forming process.

The foil tab forming apparatus 100 according to the present embodiment may be designed to operate while the central point C of the pressure portion 120 and the winding axis of the electrode assembly 20 are aligned. This alignment provides a foundation for the pressure portion 120 to accurately and uniformly press the electrode tab 27, and may maximize the precision of the foil tab forming process.

Hereinafter, the process of bending the electrode tab 27 of the electrode assembly 20 using the foil tab forming apparatus 100 according to the present embodiment will be described in detail.

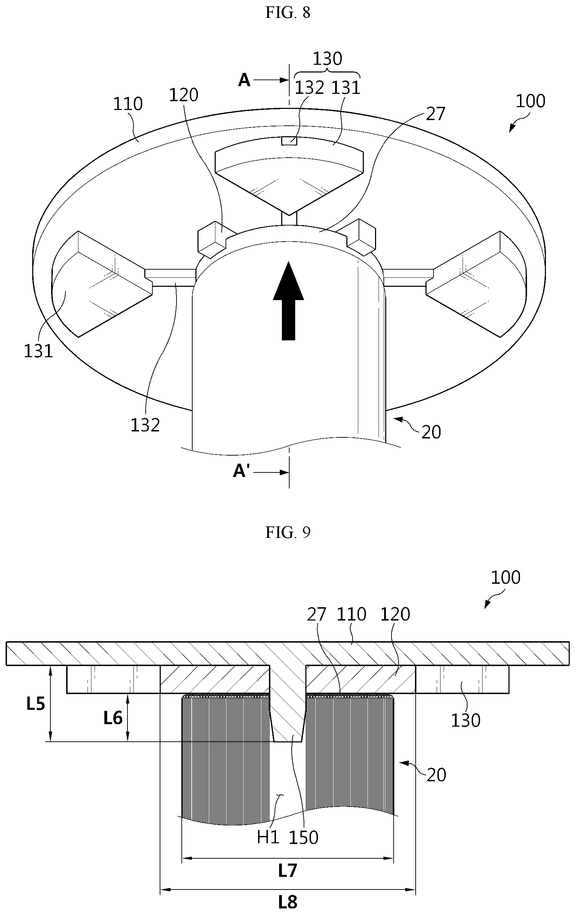

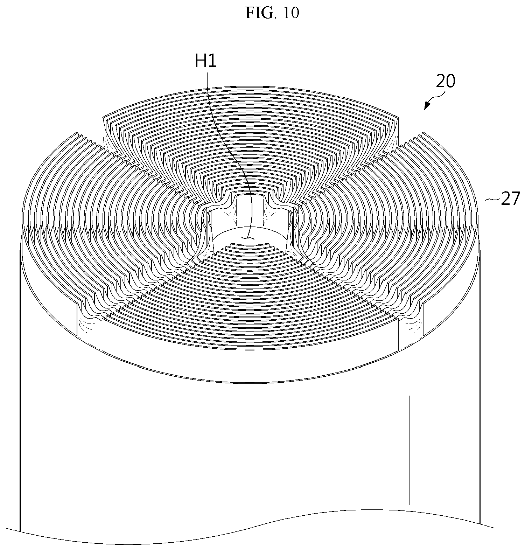

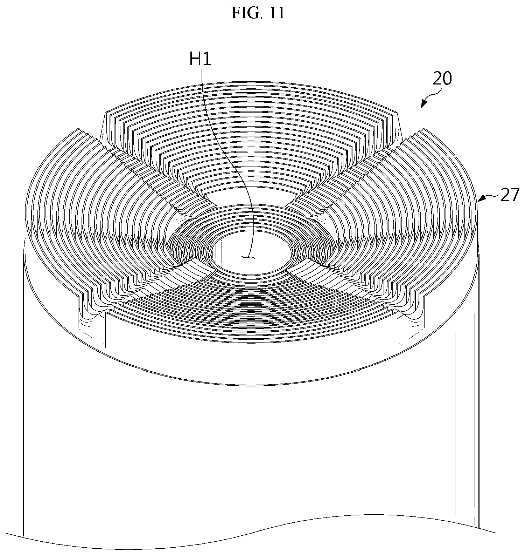

FIG. 8 is a view for describing a state in which the electrode assembly 20 of FIG. 3 is pressed by the pressure portion 120 of the foil tab forming apparatus 100 of FIG. 6, FIG. 9 is a cross-sectional view taken along line A-A' of FIG. 8, FIG. 10 is a view for describing a state in which the electrode tab 27 region of FIG. 4 is divided into a plurality of sections, and FIG. 11 is a view for describing a state in which the electrode tab region of FIG. 5 is divided into a plurality of sections.

Referring to FIGS. 8 to 11, the foil tab forming apparatus 100 according to the present embodiment moves toward the electrode assembly 20, or the electrode assembly 20 moves toward the foil tab forming apparatus 100, thereby allowing the pressure portion 120 and the electrode tab 27 to be in contact with each other.

During the process of the electrode tab 27 being pressed by the pressure portion 120, the pressure portion 120 may maintain a uniform arrangement of the electrode tabs 27 and provide the necessary pressure so that the electrode tabs 27 are stably bent in the subsequent forming process.

The movement of the foil tab forming apparatus 100 or the movement of the electrode assembly 20 may be performed by an automated system or manual control, thereby simultaneously achieving the precision and productivity of the manufacturing process.

The foil tab forming apparatus 100 of the present embodiment may include an insertion portion 150 designed to be inserted into the central hole H1 of the electrode assembly 20 to a predetermined depth.

The insertion portion 150 may stably fix the electrode assembly 20 and assist the pressure portion 120 in precisely pressing the electrode tab 27.

Additionally, the insertion portion 150 may prevent the electrode tab 27 from obscuring the central hole H1 during the forming process. This allows the welding rod to be smoothly inserted into the central hole H1 in the subsequent welding process.

Specifically, the insertion portion 150 may process or align the electrode tab 27 together with the pressure portion 120 while inserted into the central hole H1 of the electrode assembly 20. In this process, the insertion portion 150 may prevent the electrode tab 27 from encroaching on or obscuring the region of the central hole H1 during bending. For example, as described above, the electrode tabs 27 of the first electrode 21 and the second electrode 22 disposed at both ends of the electrode assembly 20 in the winding axis direction where the foil tab forming apparatus 100 of the present embodiment may be used may be configured to extend to the core side. Additionally, each of the electrode tabs 27 protruding from the core of the electrode assembly 20 to the outer circumferential side in the winding axis direction may be configured to have the same height.

Accordingly, the electrode tab 27 disposed on the core side of the electrode assembly 20 where the foil tab forming apparatus 100 of the present embodiment may be used may encroach on or obscure the region of the central hole H1 due to pressure applied during the forming process. At this time, the foil tab forming apparatus 100 of the present embodiment may priorly prevent the electrode tab 27 disposed on the core side of the electrode assembly 20 from encroaching on or obscuring the region of the central hole H1 by inserting the insertion portion 150 into the central hole H1 of the electrode assembly 20 while simultaneously applying pressure by the pressure portion 120. Thus, the present disclosure ensures that the central hole H1 may maintain its function as a reform hole even after the forming process, which may improve the welding processability of the battery cell assembly process.

In this way, the insertion portion 150 may secure accessibility to the central hole H1 during the welding process, thereby priorly preventing a problem where the insertion of the welding rod is hindered due to the arrangement and position of the electrode tab 27. This may reduce errors that may occur during the welding process and increase the precision of the assembly process.

As an example, the insertion portion 150 may be designed to be connected to the base portion 110 and protrude from the base portion 110 by a predetermined length L5. Alternatively, as an example, the insertion portion 150 may be designed to protrude further by a predetermined length L6 than the length from the base portion 110 to the pressure portion 120 based on to the winding axis direction.

Accordingly, the insertion portion 150 is first inserted into the central hole H1 of the electrode assembly 20 to align the electrode assembly 20, and may allow the pressure portion 120 to press the electrode tab 27 at an appropriate position. This design allows the insertion portion 150 to accurately fix the electrode assembly 20, and simultaneously, may provide a stable foundation for the pressure portion 120 to uniformly process the electrode tab 27.

The pressure portion 120 may be configured to press the electrode tab 27 in the winding axis direction while the insertion portion 150 is inserted into the central hole H1 of the electrode assembly 20. During this process, the pressure portion 120 may adjust the arrangement and position of the electrode tab 27 and provide the necessary pressure so that the electrode tabs 27 are uniformly bent in the subsequent forming process. Additionally, by inserting the insertion portion 150 into the central hole H1, the electrode assembly 20 may be stably maintained without positional wobbles or errors during the pressing and forming processes.

The insertion portion 150 may be adjusted to be suitable for the size and depth of the central hole H1 of the electrode assembly 20, and may be provided in a pin shape. Additionally, it may have a circular, polygonal, or specific cross-section as needed. This allows for flexible application to various electrode assembly 20 structures and sizes.

The pressure portion 120 may be designed to have a length L8 longer than the length L7 of the electrode assembly 20 based on the radial direction. Thus, the pressure portion 120 may stably press the entire region of the electrode assembly 20, particularly to the electrode tabs 27 positioned at the edges.

The electrode tabs 27 positioned at the edges of the electrode assembly 20 may be more difficult to support and press than the inner regions due to the arrangement characteristics, and if the pressing force is not uniform, defects may occur in the forming and subsequent welding processes. As the pressure portion 120 has a length L8 longer than the length L7 of the electrode assembly 20, the electrode tabs 27 positioned at the edges of the electrode assembly 20 may be designed to receive uniform pressure.

In this way, the foil tab forming apparatus 100 according to the present embodiment may be designed to maintain the arrangement of the electrode tabs 27 in an overall stable and uniform manner by including the pressure portion 120 or the insertion portion 150. For example, the pressure portion 120 and the forming jig 131 may be utilized to divide the electrode tab 27 into four equal sections at 90-degree intervals. By adjusting the number and angle of the sections as needed, they may be applied to be suitable for the size of the electrode tab 27 or battery design requirements. As an example, subdivided sections such as six or eight sections are also possible, which may provide design flexibility capable of flexibly responding to various battery cell shapes and sizes.

As illustrated in FIG. 10, in the electrode assembly 20 of an embodiment where the foil tab forming apparatus 100 of the present embodiment may be used, the electrode tab 27 disposed on the core side of the electrode assembly 20 may be aligned and formed in a state where the electrode tab 27 does not encroach on or obscure the region of the central hole H1 by the action of the insertion portion 150. This design maintains the structural function of the central hole H1 and simultaneously, ensures proper arrangement of the electrode tabs 27, which may increase work efficiency in the subsequent process.

Meanwhile, the electrode assembly 20 according to another embodiment illustrated in FIG. 11 may be configured to omit the electrode tab 27 on the core side or to have a relatively small width in the winding axis direction. In this case, even without using the insertion portion 150, the electrode tabs 27 may be formed in a state that does not encroach on or obscure the region of the central hole H1 of the electrode assembly 20. However, even in this case, the foil tab forming apparatus 100 of the present embodiment may further improve the alignment quality of the electrode tab 27 and minimize functional interference with the central hole H1 by inserting the insertion portion 150 into the central hole H1 of the electrode assembly 20 and thus preventing even at least a portion of the electrode tab 27 from extending into the region of the central hole H1. This design maintains the structural function of the central hole H1 during the battery cell assembly process, and may ensure consistency of the assembly process through the alignment and placement of the electrode tab 27.

Thus, the foil tab forming apparatus 100 according to the present embodiment may contribute to improving the quality of the battery cell assembly process and maximizing the efficiency of subsequent forming and welding processes.

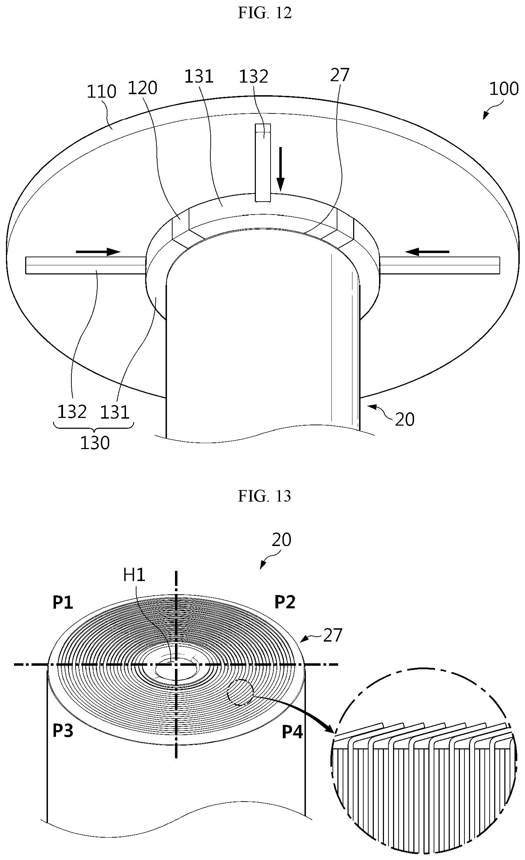

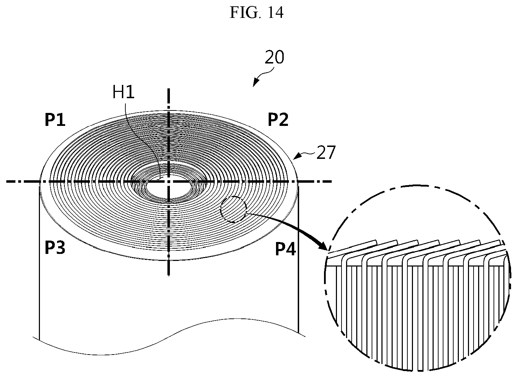

FIG. 12 is a view for describing a state in which the electrode assembly 20 of FIG. 3 is pressed by the forming portion 130 of the foil tab forming apparatus 100 of FIG. 6, FIG. 13 is a view for describing a state in which the electrode tab 27 of FIG. 4 is bent radially inward, and FIG. 14 is a view for describing a state in which the electrode tab of FIG. 5 is bent radially inward.

Referring to FIGS. 12 to 14, each of the plurality of forming portions 130 may be designed to bend the electrode tab 27 radially inward based on the outer circumferential surface of the electrode assembly 20 while the electrode tab 27 is pressed in the winding axis direction by the pressure portion 120. Accordingly, the arrangement and bending of the electrode tab 27 may be performed accurately and uniformly, and the quality and precision of the battery cell assembly process may be enhanced.

The forming portion 130 may be configured to operate while the insertion portion 150 is inserted into the central hole H1 of the electrode assembly 20. In this state, the pressure portion 120 and the forming portion 130 may have a structure surrounding the electrode tab 27 in each of the plurality of divided regions. This design allows each electrode tab 27 to be pressed and bent within an independent region, which may prevent interference between the electrode tabs 27 and strengthen the stability of the forming process.

For example, when the insertion portion 150 is inserted into the central hole H1, the alignment of the electrode assembly 20 may be maintained, and a foundation for the pressure portion 120 and the forming portion 130 to operate uniformly with respect to the electrode tab 27 may be provided. That is, in the configuration surrounding the electrode tab 27 within the divided region, the electrode tab 27 may maintain a stable position between the pressure portion 120 and the forming portion 130, and the occurrence of slippage or deformation may be prevented during the bending process.

Additionally, this configuration may maintain a uniform arrangement and bending angle of the electrode tabs 27, thereby minimizing errors that may occur in the subsequent welding process and ensuring the electrical performance and assembly quality of the battery.

In conclusion, the foil tab forming apparatus 100 according to the present embodiment may be designed such that each divided electrode tab 27 is formed to have a consistent bending direction radially inward based on the central hole H1 within the divided region. This allows a structure in which the electrode tabs 27 are uniformly arranged radially inward as a whole to be formed.

For example, when dividing the electrode tab 27 of the electrode assembly 20 into four regions, each region may be defined as P1, P2, P3, and P4. At this time, each of the electrode tabs 27 within each region may have the same bending direction, and all the electrode tabs within regions P1, P2, P3, and P4 may be designed to face radially inward based on the central hole H1. This arrangement enables overall uniform and precise forming by maintaining the alignment of the electrode tabs 27 for each region within the section.

This arrangement method ensures that the forming thickness of the electrode tabs 27 is uniformly formed throughout and prevents interference between the electrode tabs 27, which may improve the assembly quality of the electrode assembly 20. Additionally, the stability of the electrode tab 27 arrangement may be maintained even after the forming process, thereby maximizing precision and work efficiency in the subsequent welding process.

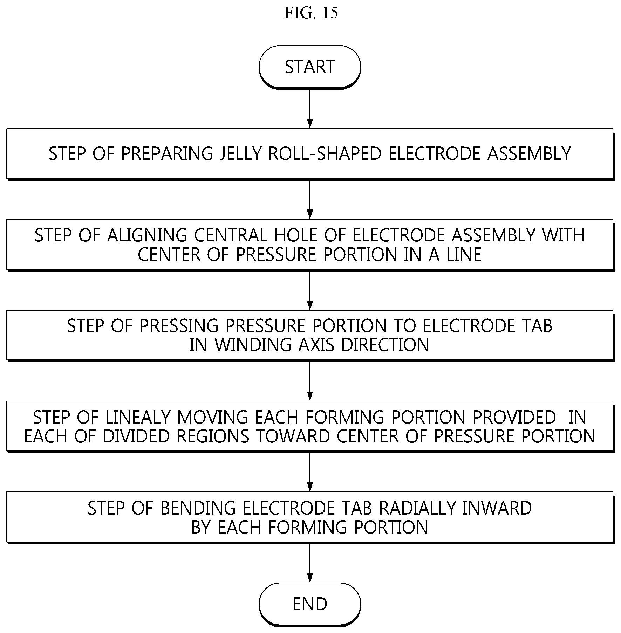

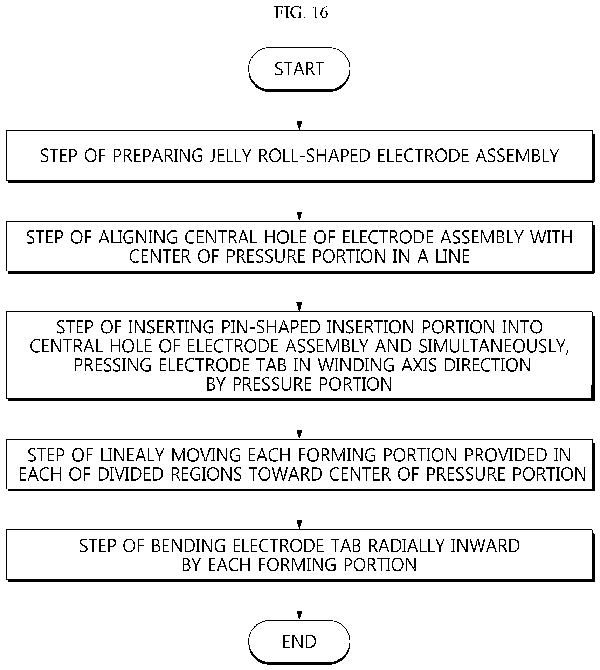

FIG. 15 is a flowchart of a foil tab forming method according to an embodiment of the present disclosure, and FIG. 16 is a flowchart of a foil tab forming method according to another embodiment of the present disclosure.

Referring to FIGS. 15 and 16, the foil tab forming method according to the present embodiment may include a process of forming an electrode assembly 20 using the foil tab forming apparatus 100 described above.

First, a step of preparing the electrode assembly 20 is performed. In this step, the electrode assembly 20 is wound and prepared with the central hole H1 formed therein, and then the electrode assembly 20 may be appropriately disposed to perform alignment with the foil tab forming apparatus 100 and the forming process.

Next, a process of aligning the central hole H1 of the electrode assembly 20 with the central point C of the pressure portion 120 of the foil tab forming apparatus 100 may be performed. This alignment step may contribute to securing precision so that the arrangement and bending direction of the electrode tabs 27 may be uniformly maintained in the forming process.

Once alignment is completed, the electrode tab 27 may be pressed along the winding axis direction using the pressure portion 120. During this process, the electrode tab 27 may be divided into a plurality of independent regions. This step serves as a preparatory work for performing the subsequent bending process, and allows the electrode tab 27 to be uniformly arranged within the divided regions.

Here, the step may further include a process of inserting an insertion portion 150 designed to be inserted into the central hole H1 of the electrode assembly 20 to a predetermined depth, while simultaneously pressing the electrode tab 27 using the pressure portion 120. The insertion portion 150 may perform the role of aligning and stably fixing the position of the electrode assembly 20 by being inserted into the central hole H1. Additionally, the insertion portion 150 is inserted into the central hole H1 of the electrode assembly 20, which prevents the electrode tab 27 from obscuring the reform hole during the subsequent welding process, thereby ensuring the efficiency and reliability of the welding process.

Finally, the forming portion 130 provided in each divided region may be moved toward the central point C of the pressure portion 120 to bend the electrode tab 27 radially inward. In this process, each forming portion 130 precisely bends the electrode tab 27 within the divided region, and may maintain an overall consistent alignment of the electrode tab 27 arrangement. This allows the forming thickness of the electrode assembly 20 to be formed uniformly, and ensures the stability of the electrode tab 27 arrangement.

Thus, the present disclosure may contribute to simultaneously improving quality and productivity throughout the battery cell manufacturing process.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [Explanation of Reference Signs]20: Electrode assembly

21: First electrode
22: Second electrode
23: Metal foil
24: Coated portion
25: Active material layer
26: Uncoated portion
27: Electrode tab
28: Separator
100: Foil tab forming apparatus
110: Base portion
120: Pressure portion
130: Forming portion
131: Forming jig
132: Connection portion
150: Insertion portion
H1: Central hole
C: Central point

## Claims

1. A foil tab forming apparatus for forming an electrode tab exposed at one end of an electrode assembly in which a first electrode, a separator, and a second electrode are laminated and wound around a winding axis, the foil tab forming apparatus comprising:
a base portion having a flat surface;
a pressure portion protruding from the flat surface of the base portion in the winding axis direction and configured to divide the electrode tab into a plurality of regions; and
a plurality of forming portions provided corresponding to the plurality of divided regions and each configured to bend the electrode tab radially inward around the winding axis within each of the divided regions.

2. The foil tab forming apparatus according to claim 1,
wherein the pressure portion has a radial structure based on the central point of the pressure portion.

3. The foil tab forming apparatus according to claim 1,
wherein the pressure portion has a length longer than the length of the electrode tab based on the winding axis direction.

4. The foil tab forming apparatus according to claim 1,
wherein each of the plurality of forming portions comprises a forming jig, and the forming jig is configured to move toward the central point of the pressure portion.

5. The foil tab forming apparatus according to claim 4,
wherein each of the plurality of forming portions comprises a connection portion provided on the flat surface of the base portion, and
wherein the forming jig is coupled to the connection portion and configured to move along the length direction of the connection portion.

6. The foil tab forming apparatus according to claim 5,
wherein the forming jig has a length longer than the length of the electrode tab based on the winding axis direction.

7. The foil tab forming apparatus according to claim 5,
wherein the pressure portion is disposed between adjacent connection portions.

8. The foil tab forming apparatus according to claim 5,
wherein the plurality of connection portions form a symmetrical structure based on the central point of the pressure portion.

9. The foil tab forming apparatus according to claim 5,
wherein each of the plurality of connection portions is disposed to be spaced apart at a predetermined distance from the central point of the pressure portion.

10. The foil tab forming apparatus according to any one of claims 1 to 9, comprising:
an insertion portion configured to be inserted into the central hole of the electrode assembly to a predetermined depth.

11. The foil tab forming apparatus according to claim 10,
wherein the insertion portion protrudes further from the base portion than the pressure portion based on the winding axis direction.

12. The foil tab forming apparatus according to claim 1,
wherein the pressure portion has a length longer than the length of the electrode assembly based on the radial direction.

13. The foil tab forming apparatus according to claim 10,
wherein the pressure portion is configured to press the electrode tab in the winding axis direction as the insertion portion is inserted into the central hole of the electrode assembly.

14. The foil tab forming apparatus according to claim 13,
wherein each of the plurality of forming portions is configured to bend the electrode tab radially inward from the outer circumferential surface of the electrode assembly while the electrode tab is pressed in the winding axis direction by the pressure portion.

15. The foil tab forming apparatus according to claim 14,
wherein the pressure portion and the forming portion are configured to surround the electrode tab in each of the plurality of divided regions when the insertion portion is inserted into the central hole.

16. A foil tab forming method for forming an electrode tab exposed at one end of an electrode assembly in which a first electrode, a separator, and a second electrode are laminated and wound around a winding axis, the foil tab forming method comprising:
a first step of preparing the electrode assembly;
a second step of aligning the central hole of the electrode assembly with the center of the pressure portion in a line;
a third step of pressing the electrode tab along the winding axis direction by the pressure portion to divide the electrode tab into a plurality of regions; and
a fourth step of moving each forming portion provided in each of the divided regions toward the center of the pressure portion to bend the electrode tab radially inward.

17. The foil tab forming method according to claim 16,
wherein the third step comprises inserting an insertion portion configured to be inserted into the central hole of the electrode assembly to a predetermined depth and simultaneously, pressing the electrode tab by the pressure portion.
